# EUROPEAN PATENT SPECIFICATION

(11) **EP 1 586 102 B1**
(45) Date of publication and mention of the grant of the patent: **18.10.2006**
(21) Application number: 03786157.2
(22) Date of filing: 22.12.2003
(51) Int. Cl.: H01H 37/54, A47J 27/21

(54) **IMPROVEMENTS RELATING TO THE CONTROL OF ELECTRIC HEATING ELEMENTS**
VERBESSERUNG DER STEUERUNG ELEKTRISCHER HEIZELEMENTE
AMELIORATIONS D'UNE COMMANDE D'ELEMENTS DE CHAUFFAGE ELECTRIQUE

(30) Priority: 16.01.2003 GB 0301007; 17.02.2003 GB 0303592
(43) Date of publication of application: 19.10.2005
(60) Divisional application: 05017465.5
(73) Proprietor: OTTER CONTROLS LIMITED, Buxton, Derbyshire SK17 6LA (GB)
(72) Inventor: BOUNDY, Paul, Buxton, Derbyshire SK17 7PZ (GB); WALFORD, Mark John, Wilmslow, Cheshire SK9 2NL (GB)
(74) Representative: Baldwin, Mark
(86) International application number: PCT/GB2003/005638
(87) International publication number: WO 2004/062445

(56) References cited:
- WO-A1-99/48331
- GB-A- 2 372 159

## Description

### Field of the Invention:

This invention concerns improvements relating to the control of electric heating elements and, more particularly, is concerned with an integrated power input connector cord element overtemperature control for a cordless liquid heating appliance for switching off the supply of electricity to an electric heating element in the event of the heating element temperature rising above a safe level. Heating element overtemperature protection controls are commonly being referred to as element protector controls.

### Background of the Invention:

Element protector controls are commonly used in domestic water heating appliances, such as kettles and hot water jugs for example, but are also used widely in other domestic and industrial applications. In the following, the invention will be described with particular reference to the control of electric heating elements in domestic kettles and hot water jugs, but it is to be well understood that the invention has wider application.

Electric heating elements for domestic kettles and hot water jugs have conventionally been of the type comprising a resistance heating wire housed within an elongate tubular sheath packed with a mineral insulating material, and such sheathed heating elements were most commonly utilised in an immersion heating configuration where the heating element proper was affixed to a head plate enabling the heating element to be affixed in a vessel wall with the heating element proper immersed in the vessel contents. Planar or underfloor heating element configurations have also been known which comprised a plate, commonly of aluminium, having a sheathed heating element as aforementioned clamped or clenched to the undersurface thereof, and heating elements of this kind have been employed both as integral parts of water heating appliances and also as hot plates for use with separate water vessels, for example in coffee making machines.

More recently, so called thick film heating elements comprising an electrically insulating substrate having a resistance heating track or layer formed thereon have attracted the attention of manufacturers of domestic electric water heating appliances, inter alia on account of the increased power density of such heating elements as compared to the more conventional heating elements abovementioned which means that water can be heated much more quickly.

Bimetallic element-protector controls have commonly been utilized for the protection of conventional sheathed heating, elements, both of the immersion heating type and of the planar or underfloor type, and bimetallic element-protector controls have also been proposed to be used with thick film heating elements. Such bimetallic element-protector controls have commonly comprised a bimetallic switch-actuating element arranged to be held in close heat transfer relationship with the electric heating element and to operate a pair of switch contacts via a push rod. Proposals have been made to provide more than one bimetallic switch-actuating element in close heat transfer relationship with the electric heating element, the rationale for this being two fold, namely to provide primary and secondary (or back-up) levels of protection such that safety is assured even in the unlikely event of failure of the primary control to operate, and/or to provide thermal sensing at multiple locations of the heating element in an endeavour to ensure safety even if an appliance is operated on an inclined surface, a domestic draining board for example, so that if the appliance boils dry a specific part (the higher part) will boil dry and overheat whilst the remainder of the heating element surface is still covered with water and thus is at a normal operating temperature.

Other proposals for providing primary and secondary protection have utilized a bimetallic switch-actuating element for providing primary protection, and a fusible element with a melting temperature above that at which the primary bimetal would normally operate for providing secondary protection.

Reference may be made to our GB-A-2 176 055 and GB-A-2 194 099 for examples, respectively, of dual bimetal element protector controls and controls incorporating bimetallic primary protection in conjunction with fusible element secondary protection. Other such arrangements are disclosed in Strix Limited's GB-A-2 299 454 and GB-A-2 181 598.

Element-protection controls as described hereinbefore have been proposed to be used with both corded and cordless water heating appliances, corded appliances, as is well known, having an integral electricity supply cord or cable and cordless appliances comprising a base unit and an appliance proper, the base unit being corded and co-operating electrical connectors being provided on the appliance proper and on the base to enable a heating element in the appliance proper to be powered via the base when the appliance proper is appropriately seated with respect to the base. Cordless appliances and their co-operating electrical connectors were originally such that in order to effect proper connection, the appliance proper had to be set down onto its base in a predetermined relative orientation with respect to the base, but the disadvantages and inconveniences of this were appreciated and led to the development of 360° connector sets, that is to say cooperating base and appliance proper connectors which enabled the appliance proper to be set down on its base irrespective of its rotational orientation relative to the base.

Reference may be made to our GB-A-2 241 390 and GB-A-2 285 716 for examples, respectively, of cordless connection systems which required a particular orientation of the appliance proper with its base and 360° cordless connection systems. Other such arrangements are disclosed in Strix Limited's GB-A-2 263 364 and WO-A-95/08204.

The Russell Hobbs Millenium^{™} kettle is an example of a recently launched and highly successful product which combines thick film heating element and 360° cordless technology with bimetallic heating element protection. We have made various proposals for combining our CS4/CP7 360° cordless connector system as currently manufactured with our X2 series element protector control and examples of these proposals are described in our GB-A-2 306 801. As is well known, the X2 element protector control which is described in our GB-A-2 315 366 and GB-A-2 248 724 utilizes a snap-acting bimetallic switch actuator for providing a primary level of protection and has the bimetal mounted in a collapsible thermoplastics carrier for providing a secondary or back-up level of protection operative in the event of failure of the primary protection.

Our X4 series of element protector controls were developed as a successor to the X2 controls and are currently enjoying significant commercial success. The X4 controls are substantially as described in GB-A-2 339 088 and GB-A-2 372 159. As is described in this document, the design of the X4 controls lends itself to the controls being embodied in a number of different forms, all of which integrate heating element overtemperature protection with a 360° power input connector designed to co-operate with a complementary power output connector of a cordless appliance base. In one version, spaced apart bimetallic actuators determine the condition of switch contact sets provided in the control so as to determine whether or not power can be supplied through the control to a heating element via the power input connector. In another version, one of the bimetallic actuators is replaced by a fusible component. In either of these versions an arrangement can be accommodated whereby overheating of an appliance heating element will cause operation of a bimetallic actuator to disrupt the power supply path to the heating element and the system is then latched in inoperative condition, but can be reset by lifting the appliance proper off of its base and then returning it to the base. All versions provide for a steam control, the Z5 steam control which is described in our GB-A-2 331 848 for preference, to be coupled to the element protector control.

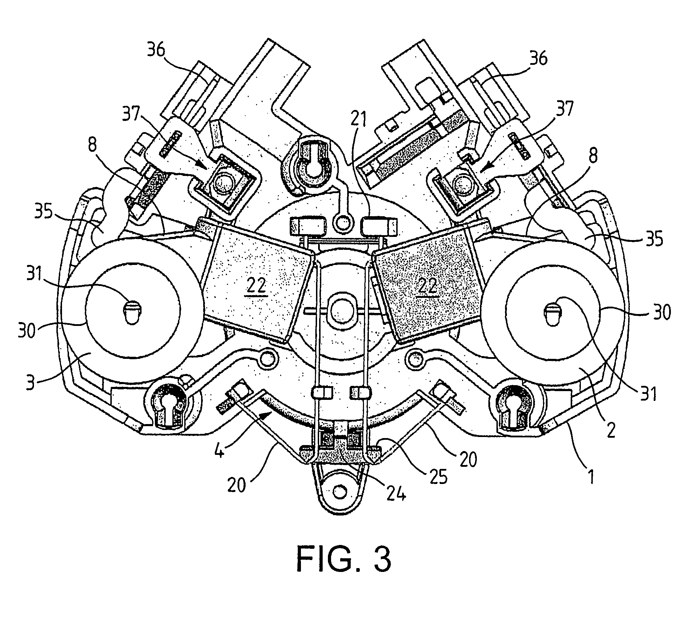

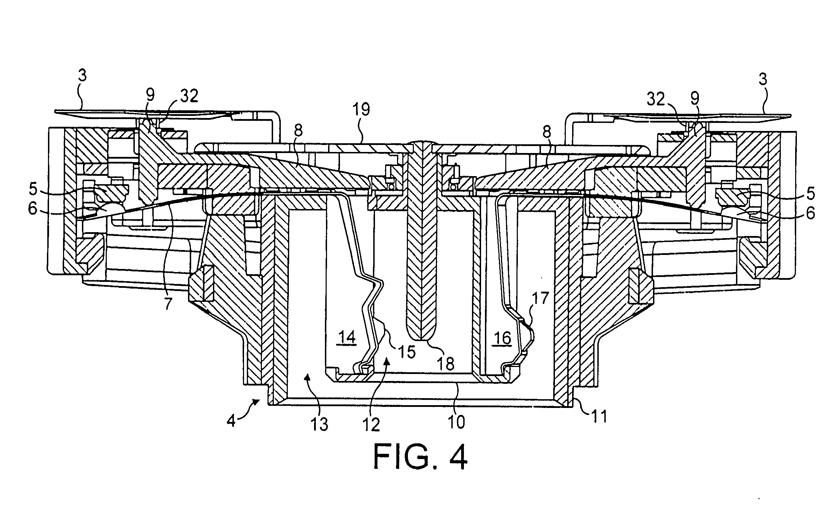

Figures 4A to 4D of our GB-A-2 339 088 and GB-A-2 372 159 show the mechanism whereby a bimetal, once actuated, has to be reset in order that the control can supply power through to the accompanying heating element. The bimetal 16 is mounted in a spring metal carrier, see Figures 3A and 3B, which serves also as an overcentre mechanism for a push rod 26. A camming member 41 is accommodated within a chamber 40 that is fonned in the 360° power input connector part of the control and is free to move within the chamber. An opening 42 in a wall of the power input connector part allows the camming member 41 to protrude from its accommodating chamber into an annular passageway 43 that exists within the power input connector and which is occupied by a complementary part 44 of the base unit power output connector when the two connectors are properly engaged. The push-rod 26 is associated with the bimetal 16 for operating a leaf spring 14 to determine the condition of a set of switch contacts.

As is explained fully in GB-A-2 339 088 and GB-A-2 372 159, the special shape of the camming member 41 and its arrangement in the control ensures that it does not interfere with operation of the bimetal 16 and of the overcentre mechanism and push-rod 26 in response to a heating element overtemperature condition. As shown in Figure 4C, when the appliance proper is lifted off its base, the removal of the power output connector part from the power input connector part of the control enables the camming member 41 to adjust its position and orientation within its accommodating chamber to such an extent that, when the appliance proper is then set back down onto its base, the part 44 of the power output connector part entering the annular passageway 43 of the power input connector part of the control encounters the camming member 41 (see Figure 4D), drives it into engagement with the push-rod 26 and drives the push-rod so as to reset the overcentre mechanism and reset the bimetal 16 if it has not auto-reset as its temperature cools.

A control similar to our X4 control is manufactured and sold by Strix Limited as their U18 control. This is described in WO-A-95/34187. The U18 control has two spaced-apart bimetals each responsive to the temperature of a heating element with which the control is associated, each bimetal determining the status of a respective set of switch contacts in the control. The two bimetals are coupled to an overcentre mechanism which has a manually accessible reset. The U18 control has also seen considerable commercial success.

The industry in which we and Strix Limited operate is driven by high volumes and low cost, and efforts are constantly being made to improve the controls that are offered to appliance manufacturers. The present invention results from further work that we have undertaken to integrate a 360° cordless connection system with an element protector control providing plural levels of protection, particularly for use with planar heating elements including both thick film heating elements and heating elements comprising a planar substrate having a sheathed heating element mounted in or on the underside thereof.

GB-A-2 339 088 and GB-A-2 372 159 disclose an integrated power input connector and heating element overtemperature protection control for a cordless liquid heating appliance comprising an appliance proper and a power base, wherein the overtemperature protection control comprises a thermally-responsive switch actuator arranged to determine the condition of a set of switch contacts by way of an intermediate member movable between first and second positions corresponding to closed and open conditions of said switch contacts, a spring latch arrangement for cooperating with the intermediate member to hold the switch contacts in contacts-open condition after operation of said thermally-responsive switch actuator and a cam element located within the power input connector so as to be moved when a power output connector of a said power base is moved into engagement with the power input connector.

### Summary of the Invention:

The invention provides an integrated power input connector and heating element overtemperature protection control for a cordless liquid heating appliance comprising an appliance proper and a power base, wherein the overtemperature protection control comprises a thermally-responsive switch actuator arranged to determine the condition of a set of switch contacts by way of an intermediate member movable between first and second positions corresponding to closed and open conditions of said switch contacts, a spring latch arrangement for cooperating with the intermediate member to hold the switch contacts in contacts-open condition after operation of said thermally-responsive switch actuator and a cam element located within the power input connector so as to be moved when a power output connector of a said power base is moved into engagement with the power input connector, characterised in that said cam element is coupled to said spring latch arrangement such that said movement of the cam element is transferred to the spring latch arrangement for bringing the spring latch arrangement into operable condition in which it cooperates with said intermediate member to hold the switch contacts in said contacts open condition and subsequent disengagement of the power input connector from the power output connector enables the spring latch arrangement to resile to an inoperable condition, whereby said spring latch arrangement is reset by removal of the appliance proper of said cordless liquid heating appliance from said power base.

The above and further features of the present invention are set forth in the appended claims and will be made more clear in the following description of an exemplary embodiment and a modification thereof which are illustrated in the accompanying drawings.

### Description of the Drawings:

Figure 1 is a top plan view of an exemplary integrated power input connector and heating element overtemperature control for a cordless liquid heating appliance embodying the present invention, this view showing the control in the condition it would normally adopt in a cordless appliance removed from its power base;
Figure 2 is a top plan view illustrating the normal condition of the control of Figure 1 when the appliance is set down onto its power base;
Figure 3 is a top plan view illustrating the condition of the control of Figures 1 and 2 when, in response to a heating element over-temperature condition, the bimetals in the control have operated associated trip levers thereby opening respective live and neutral current paths in the control and spring-wire parts have moved to prevent resetting of the trip levers;
Figure 4 is a cross-sectional view of the control of Figures 1, 2 and 3;
Figure 5 is an underneath plan view of a modified form of the control of Figures 1 to 4 including a steam sensor;
Figure 6 is a schematic side elevation view showing the dished bimetallic actuator of the previously described embodiment, in its cold condition, held in contact with a surface whose temperature is to be monitored by means of a spring metal mounting component;
Figure 7 shows the Figure 6 arrangement in a condition wherein the bimetallic actuator has been heated by the surface, but has not yet snapped to its oppositely-dished configuration; and
Figure 8 shows the Figure 6 arrangement in a condition wherein the bimetallic actuator has snapped to its oppositely dished configuration.

### Detailed Description of the Embodiments:

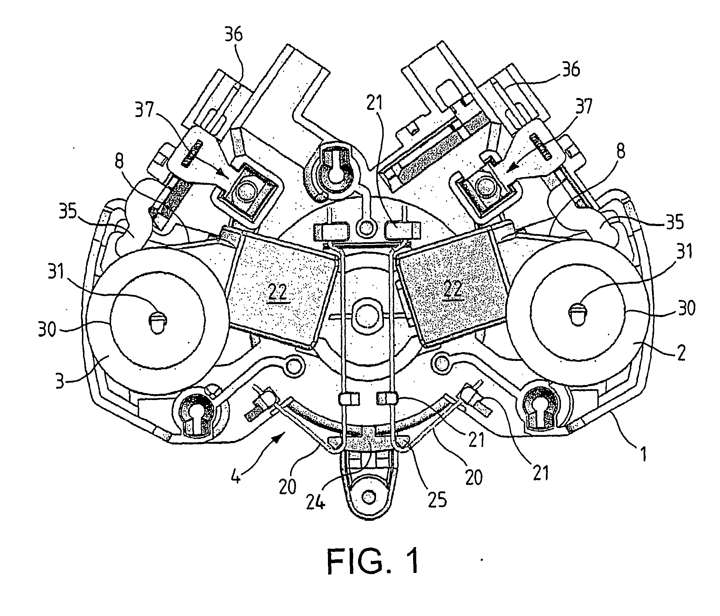

Referring to Figure 1, the embodiment of the invention illustrated therein is an integrated heating element overtemperature control (otherwise known as a dry boil control) and 360° appliance power input connector for a cordless liquid heating appliance. The embodiment is intended to be used with a cordless appliance, particularly a cordless electric kettle or hot water jug, and serves as a power input connector for the appliance proper, taking its power from a complementary 360° power output connector provided on a power base of the cordless appliance, and as a control for switching off the supply of power to the appliance heating element in a sensed heating element overtemperature condition caused, for example, by switching on the appliance without first filling it with water.

The embodiment comprises a plastics material body moulding 1 having on one side thereof, the side shown uppermost in Figure 1, mountings for first and second bimetallic switch-actuating elements 2 and 3 and on the other side thereof a 360° power input connector 4, the bimetallic elements 2 and 3 being symmetrically arranged one on each side of the power input connector 4.

Referring additionally to Figure 4, each of the bimetallic elements 2 and 3 has associated therewith a set of switch contacts comprising a fixed contact 5 and a movable contact 6 which is mounted at one end of a leaf spring 7. A pivotally-mounted trip lever 8 is associated with each of the bimetallic elements 2 and 3 and at one end the trip lever 8 has an integrally formed push-rod 9 which serves to transmit switch-operating movement of the respective one of the bimetallic elements 2 and 3 to the respective leaf spring 7 for determining the condition, open or closed, of the respective switch contacts 5, 6.

The leaf springs 7 extend, within the control, from the locations of the bimetallic elements 2 and 3 and their associated switch contacts 5, 6 to the 360° power input connector 4. As shown in Figure 4, the power input connector 4 has inner and outer cylindrical walls 10 and 11 defining a central chamber 12 and a surrounding annular passageway 13. One of the leaf springs 7 extends, as shown, within a first recess 14 in the inner wall 10 and has adjacent to its lower (as viewed in Figure 4) end a contact 15 which projects into the central chamber 12, and the other of the leaf springs 7 similarly extends within a second recess 16 in the inner wall 10 and has adjacent to its lower end a contact 17 which projects into the annular passageway 13. The complementary 360° power base output connector is not shown in any of the accompanying drawings, but it will be readily understood that it is substantially as described in our GB-A-2 285 716 and has a central cylindrical part which is adapted to fit into the central chamber 12 of the power input connector 4 abovedescribed and a surrounding, spaced-apart annular cylindrical part which is adapted to fit into the annular passageway 13, the central cylindrical part carrying on its external surface a ring contact adapted for contacting the contact 15 and the surrounding annular cylindrical part carrying on its internal surface a ring contact adapted for contacting the contact 17. As shown in Figure 4, the control power input connector 4 further includes a central earth pin 18 which is mounted to a metal mounting plate 19 of the control and the central cylindrical part abovementioned of the power output connector has an accommodating central recess with contacts adapted to make electrical contact with the earth pin 18.

Referring back to Figures 1, 2 and 3, it will be seen that a pair of elongate wire springs 20 are movably captured on the surface of the body moulding 1 by virtue of being loosely engaged with formations 21. As will be explained hereinafter, each of the springs 20 is arranged to provide a latching function whereby, when a respective one of the bimetallic elements 2, 3 responds to a heating element overtemperature condition by depressing the push-rod 9 of its associated pivotally-mounted trip lever 8, the respective spring 20 moves to a position where it prevents the trip-lever 8 from resetting.

Figure 1 shows the rest condition of the control, namely the condition that it would adopt with the appliance proper not subject to any heating element overtemperature situation and removed from its power base. Of particular note in this figure is the relationship of the spring wires 20 to the adjacent corners of the generally-rectangular extension parts 22 of the trip-levers 8; as can be seen, the wires 20 bend around and are spaced apart from the abovementioned corners of the trip levers 8.

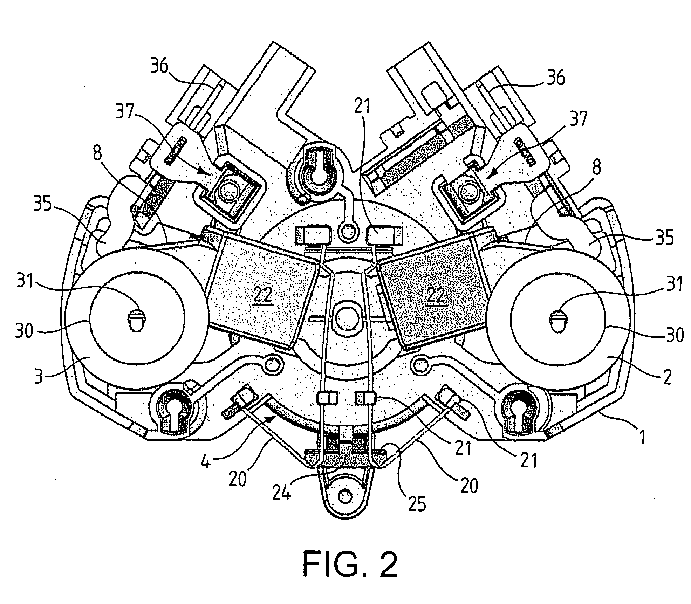

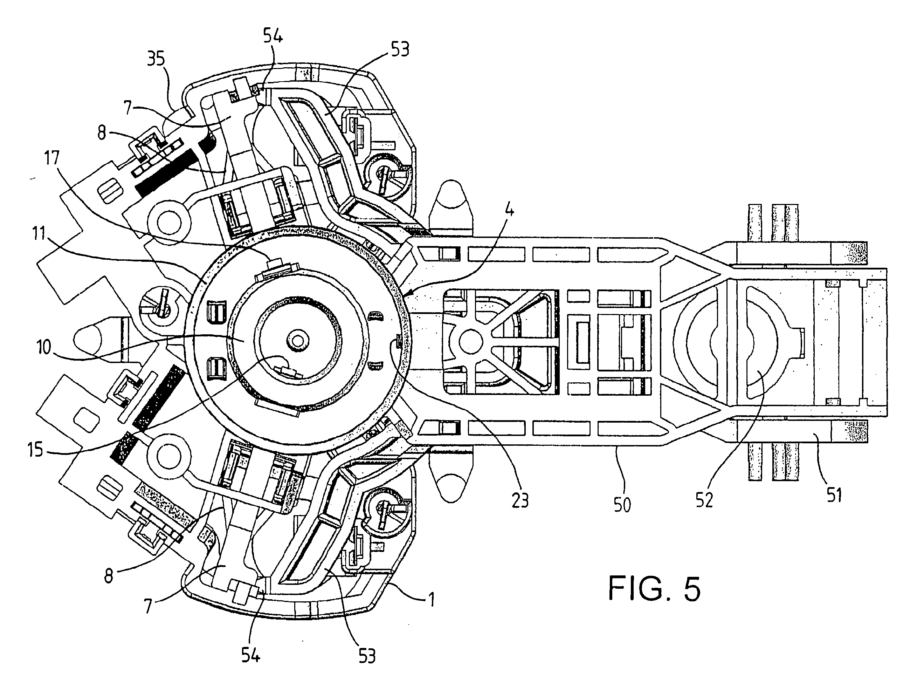

When the appliance proper is set down onto its power base, the power base output connector enters into the annular passageway 13 of the power input connector 4 where it encounters a pivotally-mounted cam member 23 (see Figure 5), the head portion 24 of which can be seen in Figures 1, 2 and 3. The cam member 23 is coupled to the spring wires 20 by virtue of the wires being bent around upstands 25 formed on the head portion 24 of the cam member. As the appliance proper is set down onto its power base, so the action of the power base output connector on the cam member 23 causes the upstands 25 to be pulled back, pulling the wires 20 with them and bringing the bent parts of the wires 20 into contact with the abovementioned corners of the trip-lever parts 22. In this condition, the wires 20 are urged inwardly towards each other by the edges of the corner parts of the trip lever parts 22. This is shown in Figure 2.

In the event of one or other or both of the bimetallic elements 2, 3 then responding to a heating element overtemperature condition, such response causing the associated trip lever 8 to pivot, the corner abovementioned of the respective trip lever(s) will move so as to allow the wire spring 20 to spring out under the corner of the trip lever thereby latching it in position and preventing its return. In this condition, the latched trip lever will hold open its associated electrical contacts set 5, 6 so that power cannot be supplied through the control to the heating element of the associated appliance. This is shown in Figure 3.

To reset the trip lever(s) 8, it is only necessary to lift the appliance proper off its power base. This releases the cam member 23 abovementioned so that the springs 20 can resile to the condition shown in Figure 1, thereby permitting the trip levers to reset under the action of the leaf springs 7 acting on the push-rods 9. This will, of course, only occur if the bimetallic elements have reset and permit the trip levers to reset.

The bimetallic elements 2 and 3 are not of the commonly-used type comprising a dished disc having a C-shaped or U-shaped cut-out defining a released tongue which serves, as in WO-A-95/34187 aforementioned, for mounting of the elements. Rather, and as described more fully hereinafter, the bimetallic elements 2 and 3 in the described embodiment are dished discs which are slightly frustoconical, as is indicated by the inner circles 30 shown in Figures 1, 2 and 3, and which in their cold condition have their concave surface facing upwards (as viewed in Figures 1, 2 and 3). A small aperture 31 is formed centrally and receives a mounting finger at one end of a mounting spring 32 (see Figure 4), the other end of which is captured in a formation provided in the moulded body part 1. The mounting springs provide a degree of compliance to ensure correct positioning of the bimetallic elements with one point of their periphery in contact with the undersurface of a heating element so that, when the bimetallic elements snap to their oppositely dished configuration in response to a heating element overtemperature condition, the diametrically opposite points of their peripheries drive the push rods 9 to operate their associated switch contacts 5, 6. As will be appreciated, this arrangement provides double the amount of bimetal movement for operating the push rods than would be available with a more conventional bimetal mounting arrangement.

Electrical connection through the control to the heating element is by way of the fixed switch contacts 5 which are provided at one end of electrically-conductive terminal strips 35 which are secured in the control body moulding 1. The terminal strips 35 provide spade terminals 36 for connection by means of electrical conductors to the terminations of sheathed underfloor heating elements, for example, and, for use of the control with a thick film heating element, provide for the connection thereto of spring terminals 37 for contacting terminal pads provided on the underside of the heating element.

The control as illustrated in Figures 1, 2 and 3 does not have an associated steam control adapted to cause the supply of power to the heating element of an associated vessel to be switched off in response to the generation of steam when the vessel contents are boiled. Figure 5 shows a modification which does incorporate such a steam control as an integral part of the overall control. The steam control could alternatively be a separate component arranged to be detachably connected to the dry boil control by means of appropriate plug and socket connectors in the manner of our X4 and Z5 controls.

Referring to Figure 5, the body moulding 1 is formed with an extension 50 which carries a trip-lever 51 mounted by an overcentre arrangement which provides for pivotal movement of the trip lever between two stable positions. Though not readily visible in the drawings, it will be understood that the trip lever 51 and the extension 50 have complementary parts of a pivotal V-shaped bearing and that a compression spring acting between spaced-apart but facing abutments of the trip lever and the extension holds the bearing intact whilst permitting pivotal movement of the trip lever relative to the extension between two extremes, one on each side of the centre line of the overcentre mounting. A snap-acting bimetal 52, for example a simple dished bimetallic disc, provides the impetus for movement of the trip lever between its opposite positions and may be arranged so as in use of the control to be exposed to steam generated when the vessel contents boil, as is well known.

The movements of the trip lever 51 are transferred to the leaf springs 7 of the control for determining the condition, open or closed, of the contacts 5, 6 and thereby determining whether or not an associated heating element will be powered. This is accomplished by providing the trip lever 51 with a bifurcated end or yoke 53 having end portions 54 arranged to co-operate with the end portions of leaf springs 7 which extend beyond the contacts 6. When the trip lever 51 is driven by the steam sensing bimetallic element 52 in response to the generation of steam, the end portions 54 of the yoke 53 act upon the leaf springs 7 so as to open the contact sets 5 and 6.

It is preferred to designate one of the contact sets 5, 6 the neutral switching contacts and the other the live contacts and to arrange the power supply connections to the power base correspondingly. To ensure that switching to disconnect the heating element is effected first in the neutral side of the power supply, the yoke 53 may be asymmetrically constructed so that one of its end portions opens its associated switch contacts before the other. This facility has importance as regards compliance with official standards.

It is to be noted that the ends 54 of the trip lever 51 do not interfere with the normal operation of the dry boil bimetallic elements 2 and 3 upon the switch contacts 5 and 6 and their associated leaf springs 7. The trip lever 51 can open the contacts 5 and 6 and may be connected to a manual control serving as an ON/OFF switch, but the dry boil mechanism, that is to say the mechanism whereby the control switches OFF in response to a heating element overtemperature condition, does not act on the trip lever 51 in any way.

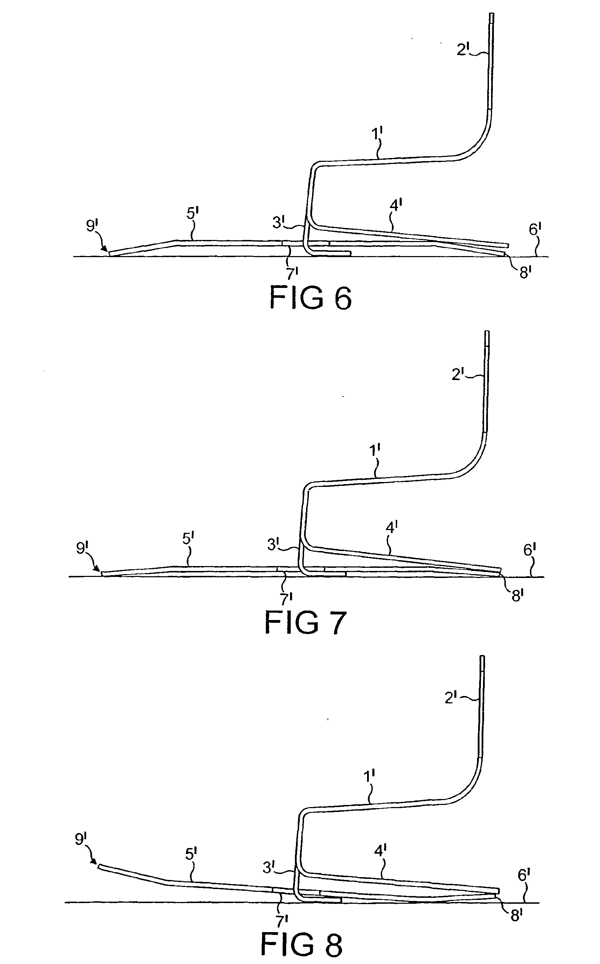

Referring now to Figures 6 to 8, the bimetal mounting arrangement will now be described in more detail. The mounting spring 1' is shown in side view and is a spring metal strip of approximately 6mm width. It is located to the body moulding of the control at its end 2'. A hook 3' is released from the plane of the mounting spring 1' and the spring extends a leg 4' which acts as a backstop for the snap-acting bimetal disc 5'. The bimetal disc, shown in its cold condition in Figure 6, sits on the surface of a planar heating element 6' which is to be protected. The element may be a thick film type, or the surface 6' may be the heat diffusion plate of an underfloor sheathed heating element type. The hook 3' is passed through a central hole 7' in the bimetal disc. In the cold state, shown in Figure 6, the bimetal disc is mounted with its concave surface facing the element 6'. The hook 3' rests against the element surface and the extended leg 4' presses the bimetal 5' against the surface. Note that the centre of the bimetal is clear of the hook in this case, to ensure that the edges of the bimetal disc remain in contact with the element surface for efficient heat transfer. Note also that the backstop leg 4' rests on the bimetallic disc 5' a distance in from the edge of the blade so that sufficient force is applied to the disc to give it a good thermal contact with the element surface.

In Figure 7 the bimetal is shown heated, immediately before it snaps through to reverse its curvature. Note that the centre is still clear (just) of the hook 3'. Note also that the backstop force is now through the edge of the bimetallic disc 5' so that minimal deformation of the blade is made and hence a low offset temperature between mounted and un-mounted disc snap temperature is achieved.

In Figure 8 the bimetallic disc 5' is shown in its hot condition, having reversed its curvature. The extended leg 4' exerts sufficient force to ensure that the edge 8' of the bimetal is urged against the element surface. The opposite edge 9' of the bimetal is urged away from the element surface with the hook 3' acting as a fulcrum to gain maximum movement across the diameter of the bimetal. The edge 9' of the bimetal engages the respective pivoted push rod hereinbefore described, causing it to move so that the contacts open and the manual reset latch mechanism engages. The backstop force is maintained well above the force required to open the contacts and operate the manual reset.

Note that in Figures 6 to 8 the bimetallic disc 5' is shown as having an almost flat central area surrounded by a frustoconical surface. This is an alternative form of tooling the bimetal, but the described mounting arrangement works equally well with a bimetallic disc of spherical form.

The advantages of this mounting method are that it ensures the rim of the bimetal is pressed against the element for more efficient heat transfer, right up to the point of snap. The spring mounting of the bimetal ensures that inaccuracy, deformation and movement of the heating element do not affect the operation of the control, a feature which is well known. However, as far as we are aware, a resilient mounting has not previously been applied in such a manner as to give extra movement from a bimetal edge, particularly by providing a fulcrum at the centre of the bimetallic disc and restraining the opposite edge.

Whilst it is convenient to provide the part 3' of the spring 1' with a hooked end serving as a fulcrum for movement of the switch-operating side 9' of the bimetallic actuator 5', the fulcrum could alternatively be provided as a formation on the surface of the heating element 6', for example.

The invention having been described in the foregoing by reference to particular embodiments, it is to be well appreciated that modifications and variations thereto are possible without departure from the scope of the present invention as set forth in the appended claims. For example, the embodiments make use of wire springs 20, but it is possible that the springs 20 could be formed of a plastics material and could even be formed integrally with the body moulding 1 of the control. Furthermore, conventional snap-acting bimetallic elements, for example of the kind described in WO-A-95/34187, could be used in place of the described bimetallic elements. Yet furthermore, rather than having two bimetallic element overtemperature control mechanisms placed in mirror image on either side of the control to provide double protection for a planar heating element, as in the described embodiments, a control in accordance with the present invention could comprise but a single dry boil control mechanism or could comprise more than two dry boil control mechanisms. A different kind of steam control could also be used and, where plural dry boil thermally-responsive switch actuators are provided, one of them could be a fusible element. Where plural bimetallic switch actuators are provided, the bimetals could be arranged to operate all nominally at the same temperature or there could be different temperature bimetals providing primary and secondary levels of protection and, furthermore, not all of the bimetals need be provided with an associated latching mechanism though this is preferred.

It will be appreciated that the integrated power input connector cord heating element overtemperature control of the embodiment improves upon the control disclosed by GB-A-2 339 088 and GB-A-2 372 159 by providing an alternative camming mechanism which, whilst still relying for resetting upon removal of the appliance proper of a cordless appliance from its base, no longer relies upon the specially-shaped camming member, but rather makes use of a more simple camming mechanism, still dependent upon decoupling of the respective 360° connector parts, to operate a spring-wire latching mechanism in which the response of a bimetal to a heating element overtemperature condition causes a switch-operating member to move relative to a spring wire such that the wire moves to a position whereat it inhibits the return of the switch-operating member, and in which, for resetting, a cam member moves the spring wire and enables the switch-operating member to reset in response to removal of the appliance proper from its base.

In the embodiment, a snap-acting bimetal is arranged to operate the moving contact of a set of switching contacts via a pivotal trip lever, and the spring wire is biassed towards contact with the trip lever, the arrangement being such that, in response to an overtemperature situation and with the cordless appliance seated on its power base, the bimetal will cause the trip lever to move, thereby causing the spring wire to move relative to the trip lever into a position where it blocks movement of the trip lever back to its initial position. By virtue of this arrangement, the trip lever is latched in switch-actuated, contacts open condition as regards the status of the control. To enable the mechanism to be reset from this latched condition, a simple camming member is provided which projects into the appliance power input connector part and is released when the appliance is lifted off its power base thereby enabling the spring wire to resile out of its blocking position thereby to allow the pivotal trip lever to reset to its original position under the action of the switch contacts.

A further feature of the embodiment resides in a simplification of the bimetal(s). Whereas in the X4 controls, as described in GB-A-2 339 088 and GB-A-2 372 159, the bimetals are specially-formed, generally-rectangular, dished, snap-acting bimetallic elements having a generally X-shaped cut-out in their middle, the present invention proposes to make use of a much more simple dished bimetallic disc. The dished bimetallic disc, as described, has a small central aperture which receives a mounting finger at one end of a mounting spring, the other end of the spring being captive in a formation provided in a moulded plastics body part of the control.

According to this aspect of the embodiment, a mounting for a dished bimetallic disc comprises a spring metal component having a first part adapted to extend through an opening in the dished bimetallic disc and a second part adapted to contact the bimetallic disc at or adjacent to an edge thereof on one side thereof, the arrangement being such that, with the bimetallic disc mounted so as in its cold condition to have its concave surface facing a heating element of the cordless liquid heating appliance whose temperature is to be monitored, said second part biases the circumference of the bimetallic disc into contact with said heating element whereby, when the bimetallic disc changes to its oppositely dished state in response to a rise in the temperature of said heating element, said one side of the bimetallic disc will be biassed by said second part of said spring metal component towards said heating element with the opposite side of the bimetal rising above said heating element.

The first part of the spring metal component serves to locate the bimetallic disc relative to the second part of the spring metal mounting component and could in principle simply be a plain metal finger engaged with the opening in the bimetal.. With such an arrangement, however, there would be nothing to stop the bimetallic disc from detaching from the spring metal mounting component before assembly of the whole with respect to the heating element whose temperature was to be controlled, a heating element surface for example. For this and other reasons, the first part of the spring metal component is preferably hooked at its free end so as to hold the bimetallic disc in place. This has the added advantage that when the bimetallic disc switches to its oppositely dished configuration, the hooked part is between the bimetal and the heated surface and acts as a fulcrum so increasing the movement available from the bimetallic disc.

A steam control can be part of the control, the steam control, as in the Strix Limited U18 control, comprising a further bimetallic element coupled to an overcentre yoke mechanism arranged to operate the set of switching contacts associated with the or each heating element overtemperature protection bimetal. Where two or more such bimetals are provided, it is preferred that one set of switching contacts associated with a respective one of the bimetals is operated by the steam control mechanism before the other. By virtue of this arrangement, the neutral side of the power supply to an appliance heating element can be switched out before the line side is switched.

## Claims

1. An integrated power input connector (4) and heating element overtemperature protection control for a cordless liquid heating appliance comprising an appliance proper and a power base, wherein the overtemperature protection control comprises a thermally-responsive switch actuator (2, 3) arranged to determine the condition of a set of switch contacts (5, 6) by way of an intermediate member movable between first and second positions corresponding to closed and open conditions of said switch contacts, a spring latch arrangement (20) for cooperating with the intermediate member to hold the switch contacts in contacts-open condition after operation of said thermally-responsive switch actuator and a cam element (23) located within the power input connector (4) so as to be moved when a power output connector of said power base is moved into engagement with the power input connector, **characterised in that** said cam element (23) is coupled to said spring latch arrangement (20) such that said movement of the cam element is transferred to the spring latch arrangement for bringing the spring latch arrangement into operable condition in which it cooperates with said intermediate member (8, 9) to hold the switch contacts (5, 6) in said contacts open condition and subsequent disengagement of the power input connector (4) from the power output connector enables the spring latch arrangement to resile to an inoperable condition, whereby said spring latch arrangement is reset by removal of the appliance proper of said cordless liquid heating appliance from said power base.

2. A control as claimed in claim 1, wherein said intermediate member comprises a pivotally-mounted trip lever (8, 9) and said spring latch arrangement (20) is such as to inhibit movement of said trip lever from said second position back to said first position.

3. A control as claimed in claim 2, wherein said spring latch arrangement comprises a spring element (20) arranged to interfere physically with the movement of said trip lever (8, 9) between said second position and said first position.

4. A control as claimed in claim 3, wherein said spring element comprises a wire spring (20).

5. A control as claimed in claim 3 or 4, wherein the spring element comprises an elongate spring (20) mounted to be movable by said cam element (23) generally in the direction of its elongation, the spring having a portion which is adapted to interfere physically with said trip lever (8, 9) only when the spring latch arrangement is in its operable condition, and the said portion being capable of a limited amount of transverse movement whereby to be capable of movement to inhibit resetting of the trip lever (8, 9) once the trip lever has moved to said second position.

6. A control as claimed in any of the preceding claims, comprising a plurality of said thermally-responsive switch actuators (2, 3) arranged in the control so as, in use, to be subject to the temperature of a heating element at different locations thereof.

7. A control as claimed in claim 6, wherein each of said thermally-responsive switch actuators (2, 3) has associated therewith a respective set of switch contacts (5, 6), intermediate member (8, 9) and spring latch arrangement (20).

8. A control as claimed in claim 6, wherein there are two said thermally-responsive switch actuators (2, 3), each having a respective set of switch contacts (5, 6) and intermediate member (8, 9) associated therewith, said spring latch arrangement being arranged for holding both sets of switch contacts (5, 6) in said contacts open condition.

9. A control as claimed in any of the preceding claims wherein the or each said thermally-responsive switch actuator comprises a bimetallic element (2, 3).

10. A control as claimed in claim 9, wherein said bimetallic element (2, 3) comprises a snap-acting, dished, bimetallic disc (5').

11. A control as claimed in claim 10, wherein said dished bimetallic disc (5') is frustoconical.

12. A control as claimed in claim 10 or 11, wherein said bimetallic disc (5') is apertured at its centre and is mounted in the control by means of a spring mounting including a finger (3') engaged with said aperture (7').

13. A control as claimed in claim 9, wherein the or each bimetallic element (2, 3) is a dished bimetallic actuator (5') and further comprising a mounting (1') for the dished bimetallic actuator (5'), the or each mounting comprising a spring component having a first part (3') adapted to extend through an opening (7') in the bimetallic actuator (5') and a second part (4') adapted to contact the bimetallic actuator at or adjacent one side (8') thereof, the arrangement being such that, in use, in the cold condition of the bimetallic actuator said first part locates the bimetallic actuator whilst said second part biasses it against a surface (6') whose temperature is to be monitored with its cold condition concave surface facing said surface and, when the bimetallic actuator changes to its oppositely dished state in response to an increase in the temperature of said surface, said one side (8') of the bimetallic actuator is biassed by said second part of the spring metal component towards said surface with the opposite side (9') of the bimetallic actuator moving away from said surface.

14. A control as claimed in claim 13, wherein the first part (3') of the spring metal component is adapted to serve as a fulcrum during movement of the bimetallic actuator (5') between its cold and hot conditions, thereby to increase the movement of said opposite side (4') of the bimetallic actuator.

15. A control as claimed in claim 14, wherein the first part (3') of the spring metal component has a hooked end which locates between the bimetallic actuator (5') and the said surface (6') whose temperature is to be monitored.

16. A control as claimed in any of the preceding claims further comprising a further thermally-responsive switch arrangement (50, 52) adapted for switching off the liquid heating appliance when liquid boils in the appliance.

17. A control as claimed in claim 16, wherein said further thermally-responsive switch arrangement comprises a further thermally-responsive switch actuator (52) arranged to be exposed to hot vapour when liquid boils in the appliance, and means (50) associated with said further thermally-responsive switch actuator for determining the condition of said switch contacts (5,6).

18. A control as claimed in claim 17, wherein the said means comprises a trip lever (50) having an overcentre mounting arrangement whereby the position of the trip lever is determined by the condition of said further thermally-responsive switch actuator (52), and the trip lever has a part (54) disposed for operating said switch contacts (5, 6).

19. A control as claimed in claim 18, when dependent upon claim 6, wherein there are two said thermally-responsive switch actuators (2, 3) and the trip lever (50) associated with said further thermally-responsive switch actuator (52) is adapted to cooperate with respective switch contacts (5, 6) associated with said thermally-responsive switch actuators (2, 3).

20. A control as claimed in claim 19, wherein the trip lever (50) is arranged to open the switch contacts (5, 6) associated with one of said thermally-responsive switch actuators before the other.

21. A control as claimed in any of the preceding claims, adapted for use with a planar heating element, the or each said thermally-responsive switch actuator (5, 6) being provided on one side of the control adapted to be juxtaposed with the underside of the planar heating element, and said power input connector (4) being provided on the opposite side of the control.

22. A control as claimed in any of the preceding claims, wherein said power input connector (4) is a 360° connector.

23. A control as claimed in any of the preceding claims, in combination with a planar heating element.

24. A combination as claimed in claim 23, wherein said planar heating element is a thick film heating element.

25. A cordless liquid heating appliance including a combination as claimed in claim 23 or 24.

## Patentansprüche

1. Integrierter Stromeingangsstecker (4) und Heizelement-Übertemperaturschutzsteuerung für eine schnurlose Flüssigkeits-Heizvorrichtung, die die eigentliche Vorrichtung und einen Leistungsunterbau umfasst, wobei die Heizelement-Übertemperaturschutzsteuerung einen thermisch gesteuerten Schalterbetätiger (2, 3) zur Bestimmung des Zustands einer Gruppe von Schaltkontakten (5, 6) durch ein Zwischenteil, das zwischen einer ersten und einer zweiten Position beweglich ist, was einem geöffneten und einem geschlossenen Zustand der Schaltkontakte entspricht, eine federbelastete Raste (20) zur Zusammenarbeit mit dem Zwischenglied, um die Schaltkontakte nach Betätigung des thermisch gesteuerten Schalterbetätigers im geöffneten Zustand zu halten, und ein Nockenelement (23), das sich im Stromeingangsstecker (4) befindet, das bewegt wird, wenn ein Stromausgangsstecker des Leistungsunterbaus mit dem Stromeingangsstecker in Verbindung kommt, umfasst, **dadurch gekennzeichnet, dass** das Nockenelement (23) mit der federbelasteten Raste (20) verbunden ist, sodass die Bewegung des Nockenelements auf die federbelastete Raste übertragen wird, sodass die federbelastete Raste in eine betriebsfähige Stellung gebracht wird, in der sie zusammen mit dem Zwischenglied (8, 9) die Schaltkontakte (5, 6) in den Kontakten in geöffneter Position hält und bei nachfolgender Trennung des Stromeingangssteckers (4) vom Stromausgangsstecker die federbelastete Raste in einen nicht betriebsfähigen Zustand zurückspringt, wobei die federbelastete Raste durch Entfernung der eigentlichen Vorrichtung der schnurlosen Flüssigkeits-Heizvorrichtung vom Leistungsunterteil zurückgestellt wird.

2. Steuerung nach Anspruch 1, wobei das Zwischenglied einen drehzapfengelagerten Auslösehebel (8, 9) umfasst und die federbelastete Raste (20) die Bewegung des Auslösehebels von der zweiten Position zurück in die erste Position verhindert.

3. Steuerung nach Anspruch 2, wobei die federbelastete Raste (20) ein Federelement (20) umfasst, das der Bewegung des Auslösehebels (8, 9) zwischen der zweiten und der ersten Position physisch entgegenwirkt.

4. Steuerung nach Anspruch 3, wobei das Federelement eine Drahtfeder (20) umfasst.

5. Steuerung nach Anspruch 3 oder 4, wobei das Federelement eine verlängerte Feder (20) umfasst, die so angebracht ist, dass sie vom Nockenelement (23) allgemein in die Richtung ihrer Verlängerung betätigt werden kann, wobei die Feder einen Teil besitzt, der physisch in den Auslösehebel (8, 9) nur dann eingreift, wenn sich die federbelastete Raste in ihrer betriebsbereiten Position befindet, und der Teil für eine begrenzte Querbewegung in der Lage ist, wobei er zu einer Bewegung in der Lage ist, die ein Rücksetzen des Auslösehebels (8, 9) zu verhindert, sobald der Auslösehebel sich in die zweite Position bewegt hat.

6. Steuerung nach einem der vorhergehenden Ansprüche, der mehrere in der Steuerung befindliche thermisch gesteuerte Schalterbetätiger (2, 3) umfasst, die, wenn in Betrieb, an verschiedenen Orten des Heizelements der Temperatur des Heizelements ausgesetzt sind.

7. Steuerung nach Anspruch 6, wobei jeder der thermisch gesteuerten Schalterbetätiger (2, 3) einen damit verbundenen Satz Schaltkontakte (5, 6), Zwischenglieder (8, 9) und eine federbelastete Raste (20) umfasst.

8. Steuerung nach Anspruch 6, der zwei thermisch gesteuerte Schalterbetätiger (2, 3) umfasst, wobei jeder davon einen damit verbundenen Satz Schaltkontakte (5, 6) und Zwischenglied (8, 9) umfasst, wobei die federbelastete Raste (20) so angeordnet ist, dass sie beide Sätze der Schaltkontakte (5, 6) in geöffneter Position hält.

9. Steuerung nach einem der vorhergehenden Ansprüche, wobei der oder jeder einzelne der thermisch gesteuerten Schalterbetätiger ein Bimetallelement (2, 3) umfasst.

10. Steuerung nach Anspruch 9, wobei das Bimetallelement (2, 3) eine hohlflächige Einschnapp-Bimetallscheibe (5') umfasst.

11. Steuerung nach Anspruch 10, wobei die hohlflächige Bimetallscheibe (5') stumpfkegelig ist.

12. Steuerung nach Anspruch 10 oder 11, wobei die Bimetallscheibe (5') eine Öffnung in der Mitte hat und mittels einer Feder in der Steuerung eingebaut ist und einen Finger (3'), der in die Öffnung (7') greift, umfasst.

13. Steuerung nach Anspruch 9, wobei der oder die Bimetallelemente (2, 3) ein hohlflächiger Bimetallbetätiger (5') ist und weiterhin ein Anbauteil (1') für den hohlflächigen Bimetallbetätiger umfasst, der oder jedes einzelne Anbauteil eine Federkomponente umfasst, die einen ersten Teil (3') umfasst, der durch die Öffnung (7') im Bimetallbetätiger (5') führt, und einen zweiten Teil (4'), der den Bimetallbetätiger oder eine Seite (8') davon berührt, wobei die Anordnung so ist, dass, wenn in Betrieb, bei kaltem Zustand des Bimetallbetätigers der erste Teil den Bimetallbetätiger festhält und der zweite Teil ihn gegen die Oberfläche (6') ausrichtet, dessen Temperatur mit seiner kalten konkaven Oberfläche gegenüber der Oberfläche gesteuert wird, wenn der Bimetallbetätiger in seinen anderen, hohlflächigen Zustand als Reaktion auf einen Anstieg der Temperatur der Oberfläche wechselt, wobei eine Seite (8') des Bimetallbetätigers vom zweiten Teil der Federmetallkomponente in Richtung der Oberfläche mit der gegenüberliegenden Seite (9') des Bimetallbetätigers von der Oberfläche wegbewegend gedrückt wird.

14. Steuerung nach Anspruch 13, wobei der erste Teil (3') der Federmetallkomponente bei der Bewegung des Bimetallbetätigers (5') zwischen den heißen und kalten Zuständen als Drehpunkt dient, um die Bewegung der gegenüberliegenden Seite (4') des Bimetallbetätigers zu erhöhen.

15. Steuerung nach Anspruch 14, wobei der erste Teil (3') der Federmetallkomponente ein hakenförmiges Ende hat, das sich zwischen dem Bimetallbetätiger (5') und der Oberfläche (6') befindet, deren Temperatur gesteuert werden soll.

16. Steuerung nach einem der vorhergehenden Ansprüche, der außerdem einen weiteren thermisch gesteuerten Schalter (50, 52) umfasst, der die Flüssigkeits-Heizvorrichtung ausschaltet, wenn die Flüssigkeit in der Vorrichtung kocht.

17. Steuerung nach Anspruch 16, wobei der weitere thermisch gesteuerte Schalter einen weiteren thermisch gesteuerten Schalterbetätiger (52) umfasst, der dem heißem Dampf ausgesetzt ist, wenn die Flüssigkeit in der Vorrichtung kocht, und ein Mittel (50), das mit dem weiteren thermisch gesteuerten Schalterbetätiger in Verbindung steht, um den Zustand der Schaltkontakte (5, 6) zu bestimmen.

18. Steuerung nach Anspruch 17, wobei das Mittel einen Auslösehebel (50) umfasst, der ein Overcenter-Anbauteil hat, wobei die Position des Auslösehebels durch den Zustand des weiteren thermisch gesteuerten Schalterbetätigers (52) bestimmt wird und der Auslösehebel ein Teil (54) zur Betätigung der Schaltkontakte (5, 6) hat.

19. Steuerung nach Anspruch 18 in Abhängigkeit mit Anspruch 6, wobei die beiden thermisch gesteuerten Schalterbetätiger (2, 3) und der Auslösehebel (50), der mit dem weiteren thermisch gesteuerten Schalterbetätiger (52) verbunden ist, mit den entsprechenden Schaltkontakten (5, 6) zusammenarbeitet, die mit den beiden thermisch gesteuerten Schalterbetätigern (2, 3) verbunden sind.

20. Steuerung nach Anspruch 19, wobei der Auslösehebel (50) die Schaltkontakte (5, 6) einen vor dem anderen öffnen, die mit einem der thermisch gesteuerten Schalterbetätiger verbunden sind.

21. Steuerung nach einem der vorhergehenden Ansprüche, der für den Gebrauch mit einem flächigen Heizelement angepasst wurde, wobei der oder jeder thermisch gesteuerte Schalterbetätiger (5, 6) auf einer Seite der Steuerung die Möglichkeit einer Befestigung an der Unterseite des flächigen Heizelements hat und der Stromeingangsstecker (4) sich auf der gegenüberliegenden Seite der Steuerung befindet.

22. Steuerung nach einem der vorhergehenden Ansprüche, wobei der Stromeingangsstecker (4) ein 360°-Stecker ist.

23. Steuerung nach einem der vorhergehenden Ansprüche in Kombination mit einem flächigen Heizelement.

24. Steuerung nach einem der vorhergehenden Ansprüche, wobei das flächige Heizelement ein Dickfilm-Heizelement ist.

25. Schnurlose Flüssigkeits-Heizvorrichtung mit einer wie in den Ansprüchen 23 oder 24 genannten Kombination.

## Revendications

1. Commande de connecteur d'entrée d'alimentation intégrée (4) et de protection contre un dépassement de température dans un élément de chauffage destinée à un appareil de chauffage de liquide sans fil comprenant un appareil proprement dit et une base d'alimentation, dans lequel la commande de protection contre un dépassement de température comprend un actionneur à commutateur thermosensible (2, 3) prévu pour déterminer la condition d'un ensemble de contacts de commutation (5, 6) au moyen d'un organe intermédiaire mobile entre des première et deuxième positions correspondant à des conditions ouverte et fermée desdits contacts de commutation, une disposition de verrouillage à ressort (20) coopérant avec l'organe intermédiaire pour maintenir les contacts de commutation en condition de contacts ouverts après l'action dudit actionneur de commutation thermosensible et un élément de came (23) placé à l'intérieur du connecteur d'entrée d'alimentation (4) afin d'être déplacé lorsqu'un connecteur de sortie d'alimentation de ladite base d'alimentation est placé en engagement avec le connecteur d'entrée d'alimentation, **caractérisée en ce que** ledit élément de came (23) est couplé à ladite disposition de verrouillage à ressort (20) de sorte que ledit déplacement de l'élément de came soit transféré à la disposition de verrouillage à ressort pour amener la disposition de verrouillage à ressort en condition utilisable dans laquelle elle coopère avec ledit organe intermédiaire (8, 9) pour maintenir les contacts de commutation (5, 6) dans ladite condition ouverte de contacts et un désengagement ultérieur du connecteur d'entrée d'alimentation (4) du connecteur de sortie d'alimentation permet à la disposition de verrouillage à ressort de repasser en condition non utilisable ce qui fait que ladite disposition de verrouillage à ressort est remise à l'état initial en retirant l'appareil proprement dit dudit appareil à chauffage de liquide sans fil de ladite base d'alimentation.

2. Commande selon la revendication 1, **caractérisée en ce que** ledit organe intermédiaire comprend un levier de déclenchement monté pivotant (8, 9) et ladite disposition de verrouillage à ressort (20) est telle qu'elle peut limiter le déplacement retour dudit levier de déclenchement entre ladite deuxième position et ledite première position.

3. Commande selon la revendication 2, **caractérisée en ce que** ladite disposition de verrouillage à ressort comprend un élément à ressort (20) prévu pour interférer physiquement avec le déplacement dudit levier de déclenchement (8, 9) entre ladite deuxième position et ladite première position.

4. Commande selon la revendication 3, **caractérisée en ce que** ledit élément à ressort comprend un ressort en fils (20).

5. Commande selon la revendication 3 ou 4, **caractérisée en ce que** l'élément à ressort comprend un ressort allongé (20) monté pour être déplacé par ledit élément de came (23) généralement dans la direction de son allongement, le ressort ayant une partie qui est adaptée pour n'interférer physiquement avec ledit levier de déclenchement (8, 9) que quand la disposition de verrouillage à ressort est en condition utilisable, et ladite partie pouvant avoir une quantité limitée de déplacement transversal pour pouvoir se déplacer pour limiter la remise à zéro du levier de déclenchement (8,9) une fois que le levier de déclenchement s'est déplacé vers ladite deuxième position.

6. Commande selon l'une quelconque des revendications précédentes, comprenant une pluralité desdits actionneurs de commutation thermosensibles (2, 3) disposés dans la commande pour, en cours d'utilisation, être soumis à la température d'un élément de chauffage en différents endroits de ceux-ci.

7. Commande selon la revendication 6, **caractérisée en ce que** chacun desdits actionneurs de commutation thermosensibles (2, 3) est associé à un ensemble respectif de contacts de commutation (5, 6), d'organe intermédiaire (8, 9) et de disposition de verrouillage à ressort (20).

8. Commande selon la revendication 6, **caractérisée en ce qu'**il y a deux dits actionneurs de commutation thermosensibles (2, 3), chacun ayant un ensemble respectif de contacts de commutation (5, 6) et d'organe intermédiaire (8, 9) associé, ladite disposition de verrouillage à ressort étant agencée pour maintenir les deux ensembles de contacts de commutation (5, 6) en condition ouverte de contacts.

9. Commande selon l'une quelconque des revendications précédentes, **caractérisée en ce que** le ou chaque dit actionneur de commutation thermosensible comprend un élément bimétallique (2, 3).

10. Commande selon la revendication 9, **caractérisée en ce que** ledit élément bimétallique (2, 3) comprend un disque bimétallique incurvé à action brusque (5').

11. Commande selon la revendication 10, **caractérisée en ce que** le disque bimétallique incurvé (5') est tronconique.

12. Commande selon la revendication 10 ou 11, **caractérisée en ce que** ledit disque bimétallique (5') a une ouverture en son centre et est monté dans la commande au moyen d'un montage de ressort comprenant un doigt (3') engagé dans ladite ouverture (7')

13. Commande selon la revendication 9, **caractérisée en ce que** l'élément ou chaque élément bimétallique (2, 3) est un actionneur bimétallique incurvé (5') et comprenant de plus un montage (1') destiné à l'actionneur bimétallique incurvé (5'), le ou chaque montage comprenant un composant à ressort ayant une première partie (3') adaptée pour se prolonger à travers une ouverture (7') dans l'actionneur bimétallique (5') et une deuxième partie (4') adaptée pour se mettre en contact avec l'actionneur bimétallique au niveau ou près d'un premier côté (8') de celui-ci, la disposition étant telle que, en cours d'utilisation, en condition froide de l'actionneur bimétallique ladite première partie positionne l'actionneur bimétallique tandis que ladite deuxième partie le pousse contre une surface (6') dont la température doit être surveillée, sa surface concave en condition froide étant en face de ladite surface et, quand l'actionneur bimétallique passe à son état incurvé opposé en réponse à une augmentation de la température de ladite surface, ledit premier côté (8') de l'actionneur bimétallique est poussé par ladite deuxième partie du composant métallique de type ressort en direction de ladite surface, le côté opposé (9') de l'actionneur bimétallique s'éloignant de ladite surface.

14. Commande selon la revendication 13, **caractérisée en ce que** la première partie (3') du composant métallique à ressort est adaptée pour servir de point d'appui durant le déplacement de l'actionneur bimétallique (5') entre ses conditions froide et chaude, ce qui augmente le déplacement dudit côté opposé (4') de l'actionneur bimétallique.

15. Commande selon la revendication 14, **caractérisée en ce que** la première partie (3') de la composante métallique à ressort a un extrémité en forme de crochet qui se place entre l'actionneur bimétallique (5') et ladite surface (6') dont la température doit être surveillée.

16. Commande selon l'une quelconque des revendications précédentes comprenant de plus une disposition de commutation thermosensible (50, 52) adaptée pour arrêter l'appareil de chauffage de liquide quand le liquide bout dans l'appareil.

17. Commande selon la revendication 16, **caractérisée en ce que** ledit dispositif thermosensible comprend un actionneur de commutation thermosensible supplémentaire (52) prévu pour être exposé à une vapeur chaude quand le liquide bout dans l'appareil, et des moyens (50) associés audit actionneur de commutation thermosensible supplémentaire pour déterminer la condition desdits contacts de commutation (5, 6).

18. Commande selon la revendication 17, **caractérisée en ce que** lesdits moyens comprennent un levier de déclenchement (50) ayant une disposition de montage réversible grâce à quoi la position du levier de déclenchement est déterminée par la condition dudit actionneur de commutation thermosensible (52), et le levier de déclenchement a une partie (54) disposée pour activer lesdits contacts de commutation (5, 6).

19. Commande selon la revendication 18, dépendante de la revendication 6, **caractérisée en ce qu'**il y a deux dits actionneurs de commutation thermosensibles (2 , 3) et le levier de déclenchement (50) associé audit actionneur de commutation thermosensible supplémentaire (52) est adapté pour coopérer avec des contacts de commutation respectifs (5, 6) associés auxdits actionneurs de commutation thermosensibles (2,3).

20. Commande selon la revendication 19, **caractérisée en ce que** le levier de déclenchement (50) est prévu pour ouvrir les contacts de commutation (5, 6) associés à un desdits actionneurs de commutation thermosensibles avant l'autre.

21. Commande selon une quelconque des revendications précédentes, adaptée pour être utilisée avec un élément de chauffage plan, l'actionneur ou chaque actionneur de commutation thermosensible (5, 6) étant prévu sur un côté de la commande adapté pour être juxtaposé avec le dessous de l'élément de chauffage plan, et ledit connecteur d'entrée d'alimentation (4) étant prévu sur le côté opposé de la commande.

22. Commande selon l'une quelconque des revendications précédentes, **caractérisée en ce que** ledit connecteur d'entrée d'alimentation (4) est un connecteur à 360°.

23. Commande selon l'une quelconque des revendications précédentes, en combinaison avec un élément de chauffage plan.

24. Combinaison selon la revendication 23, **caractérisée en ce que** ledit élément de chauffage plan est un élément de chauffage à couche épaisse.

25. Dispositif de chauffage de liquide sans fil comprenant une combinaison selon la revendication 23 ou 24.
